Europäisches Patentamt

European Patent Office

Office européen des brevets

(11) Publication number: **0 141 959**
**B1**

(12) **EUROPEAN PATENT SPECIFICATION**

(45) Date of publication of patent specification: **20.04.88**

(51) Int. Cl.⁴: **B 62 D 25/14**

(21) Application number: **84110773.3**

(22) Date of filing: **10.09.84**

(54) Vehicle comprising a body and dash panel.

(30) Priority: **20.09.83 IT 6796883**
**20.09.83 IT 6796983**

(43) Date of publication of application:
**22.05.85 Bulletin 85/21**

(45) Publication of the grant of the patent:
**20.04.88 Bulletin 88/16**

(84) Designated Contracting States:
**DE FR GB**

(56) References cited:
**DE-A-3 112 036**
**DE-B-1 106 615**
**FR-A-1 180 501**
**FR-A-1 451 816**
**FR-A-2 437 337**
**US-A-1 533 093**
**US-A-4 274 646**

(73) Proprietor: **FIAT AUTO S.p.A.**
**Corso Giovanni Agnelli 200**
**I-10135 Torino (IT)**

(72) Inventor: **Piritore, Giuseppe**
**Via Guarini, 48**
**I-10078 Venaria (Torino) (IT)**
Inventor: **Fantini Muzzarelli, Marco**
**Corso Einaudi, 3**
**I-10100 Torino (IT)**

(74) Representative: **Bongiovanni, Guido et al**
**c/o Ingg. Carlo e Mario Torta Via Viotti 9**
**I-10121 Torino (IT)**

Courier Press, Leamington Spa, England.

## Description

This invention relates to a vehicle comprising a body and dash panel of improved type.

In the description given hereinafter, the term "dash panel" or "dash assembly" signifies that assembly of elements disposed in the front zone of a vehicle passenger compartment and which supports essentially the vehicle instrument panel, the steering column carrying the steering wheel, and the pedal board carrying the control pedals (clutch, brake and accelerator).

In known vehicles, the dash panel is usually constituted by an upper portion of the fire protection bulkhead which separates the vehicle passenger compartment from its engine compartment. This bulkhead forms an integral part of the vehicle body, and comprises support brackets for the instrument panel and for the vehicle controls.

Vehicles of the described type are not free from drawbacks, and in particular the form of the dash panel compels the personnel responsible for the assembly of the instrument panel and vehicle controls to assume uncomfortable and poorly productive working positions, so slowing down assembly. Moreover, when the vehicle driving position is to be changed by passing for example from a vehicle with left hand drive to a vehicle with right hand drive or vice versa, conventional dash panels have the drawback of requiring extensive modification work particularly to the body load-bearing structures. The latter drawback is overcome by French patent FR—A—1 180 501, corresponding to the preamble of claim 1, which relates to a vehicle in which the fire protection bulkhead is of conventional shape but does not directly carry the elements of the dash assembly; these latter are, on the contrary, carried by a transverse cross-member connected in a detachable manner to the upper part of the bulkhead. This upper part, however, presents its convexity faced towards the passengers compartment so that defines also the instrument panel, which therefore results integral with the bulkhead. In the vehicle of FR—A—1 180 501 as well as in the traditional vehicles of the described type, is not possible, therefore to insert vehicle accessory devices such as an air conditioning unit and/or a servo brake between the instrument panel and fire protection bulkhead. These devices must therefore be mounted inside the vehicle engine compartment and thus become disposed in positions which are poorly accessible for any repair work, and are exposed to damaging thermal and mechanical stresses.

One of the objects of the present invention is to provide a vehicle free from all the described drawbacks, and in particular provided with a dash panel of easy and rapid assembly, and on which the vehicle control devices can be pre-mounted.

It is in particular an object of the present invention to provide a vehicle having a body such as to enable the steering column to be easily assembled in any position, as in FR—A—1 180 501 and, simultaneously, auxiliary devices to be mounted between the fire protection bulkhead and the vehicle instrument panel inside the vehicle passenger compartment itself.

Said objects are attained according to the present invention by a vehicle comprising a body, which is internally subdivided by a transverse fire protection bulkhead into a passenger compartment and an engine compartment, and a dashboard assembly for said passenger compartment, comprising a support cross-member arranged to be fixed rigidly, but removably, to said body inside the passenger compartment in a position facing said bulkhead, a steering column and a pedal board, both fixed rigidly to said support cross-member, and an instrument panel supported by said cross-member in a position above the same, characterized in that said fire protection bulkhead comprises, in combination with said dashboard assembly, a substantially flat lower element arranged to frontwardly bound the floor of said passenger compartment, and a cup-shaped upper element having its concavity facing said support cross-member and its convexity projecting into the interior of said engine compartment, in such a manner that at least part of said upper element extends towards the engine compartment beyond said lower element; said support cross-member and said upper element of the bulkhead defining therebetween, inside said passenger compartment, a housing compartment for a vacuum servo-brake and for further accessory devices for said vehicle; such as an air conditioning and ventilation device for the passenger compartment; and said instrument panel being shaped in such a manner that it closes said housing compartment towards the passenger compartment.

The present invention will be more apparent from the description of one embodiment given hereinafter by way of non-limiting example with reference to the accompanying drawings, in which:

Figure 1 is a longitudinal section through the front portion of a vehicle constructed in accordance with the present invention;

Figures 2 and 3 are respectively a plan and frontal view of the dash panel of the vehicle of Figure 1;

Figure 4 is a section through the dash panel of Figure 3 on the line IV—IV; and

Figure 5 is an exploded view of the dash panel of Figures 2, 3 and 4.

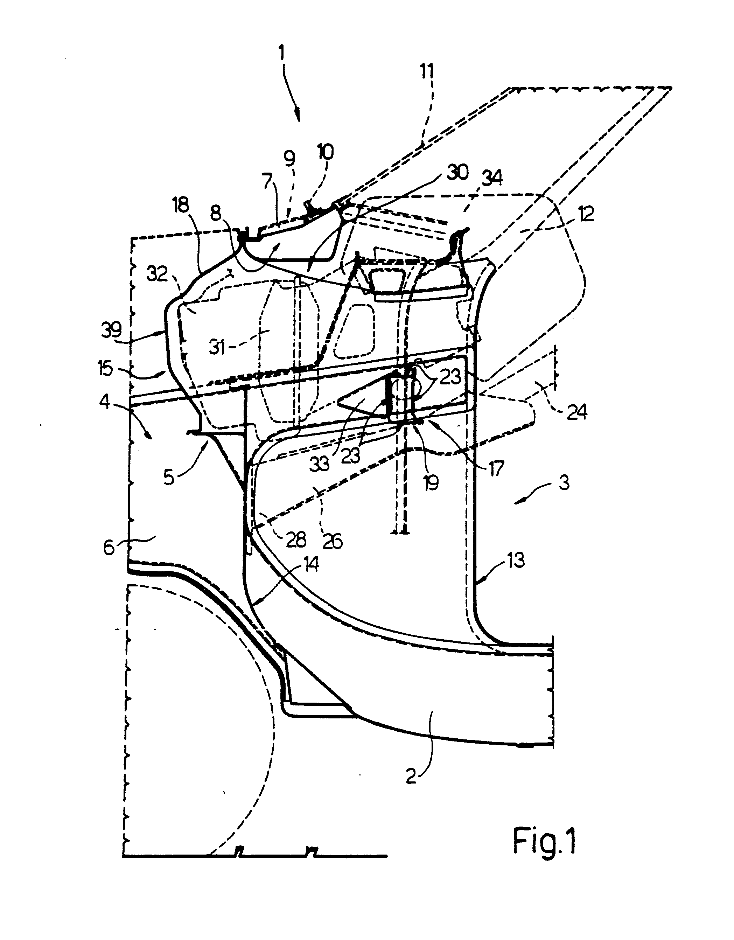

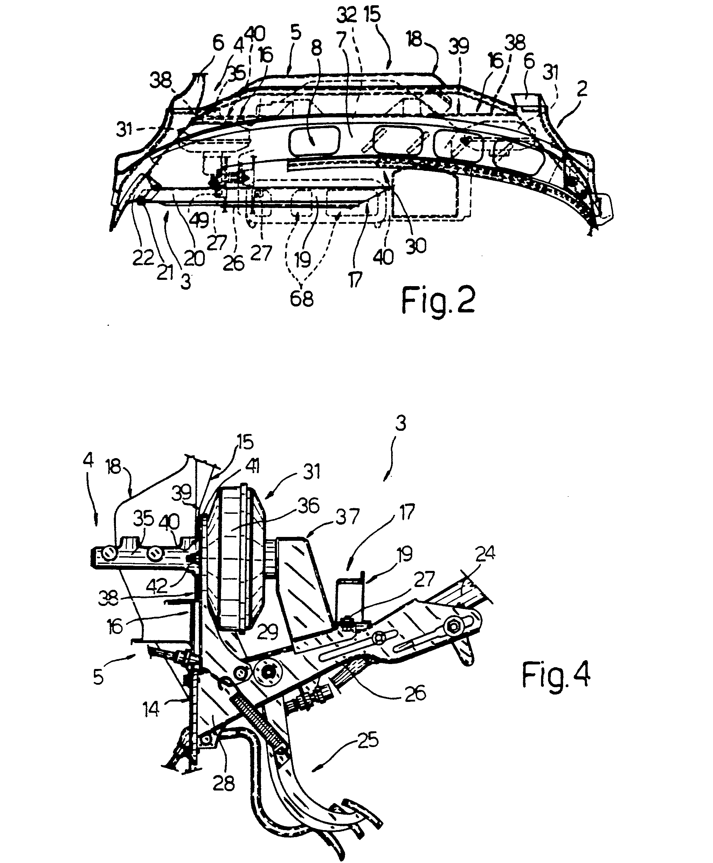

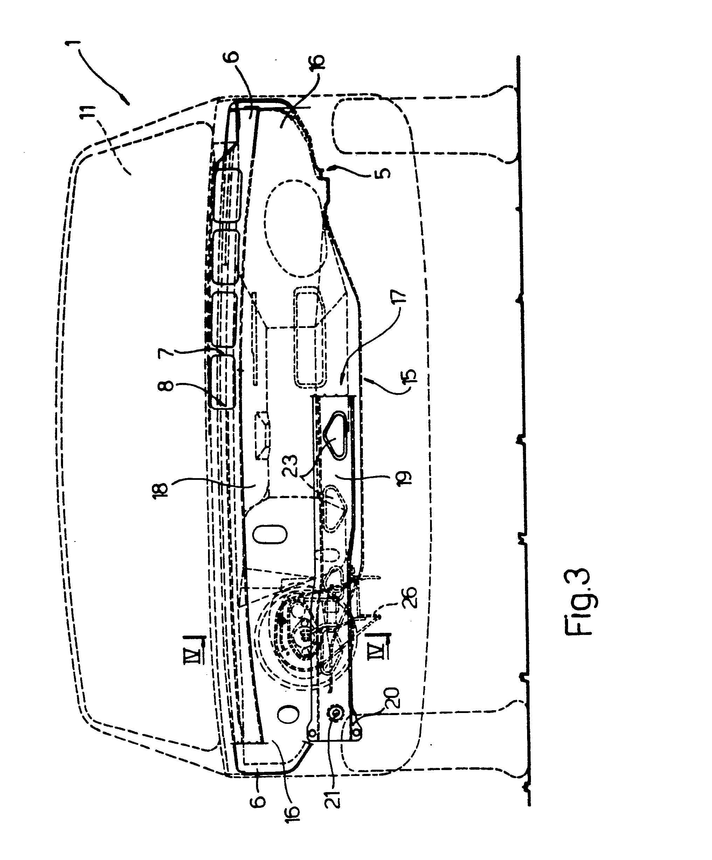

In Figure 1, the reference numeral 1 indicates overall a vehicle of any known type, and in particular a motor vehicle, of the type comprising a body 2 constructed of welded sheet metal elements and defining internally a passenger compartment 3 and an engine compartment 4 which is separated from the passenger compartment 3 by means of a fire protection bulkhead 5 forming part of the body 2. With reference also to Figures 2 and 3, the body 2 comprises two side members 6 joined together by a cross member 7 disposed at the bulkhead 5 and defining an aeration duct 8. Conveniently, the cross member 7 is covered on the outside by a grid 9, and carries at least one connection 10 for a known windscreen wiper, not shown. The passenger compartment 2 is frontwardly bounded by a windscreen 11, which extends at its base from the cross member 7 and at its sides from uprights 12 which define side door openings 13.

The fire protection bulkhead 5 is constructed of welded pressed sheet metal and comprises a lower substantially flat element 14 which frontwardly bounds the floor of the passenger compartment 2, and an upper cup-shaped element 15 having its concavity facing the passenger compartment 2 and its convexity extending into the engine compartment 4. Specifically, the element 15 comprises two opposing substantially flat symmetrical side portions 16 and a central portion 18 provided with said concavity, which extends towards the engine compartment 4 and juts towards this latter beyond the lower element 14. The element 15 is fixed lowerly to the element 14, preferably by welding, and is welded upperly to the cross member 7.

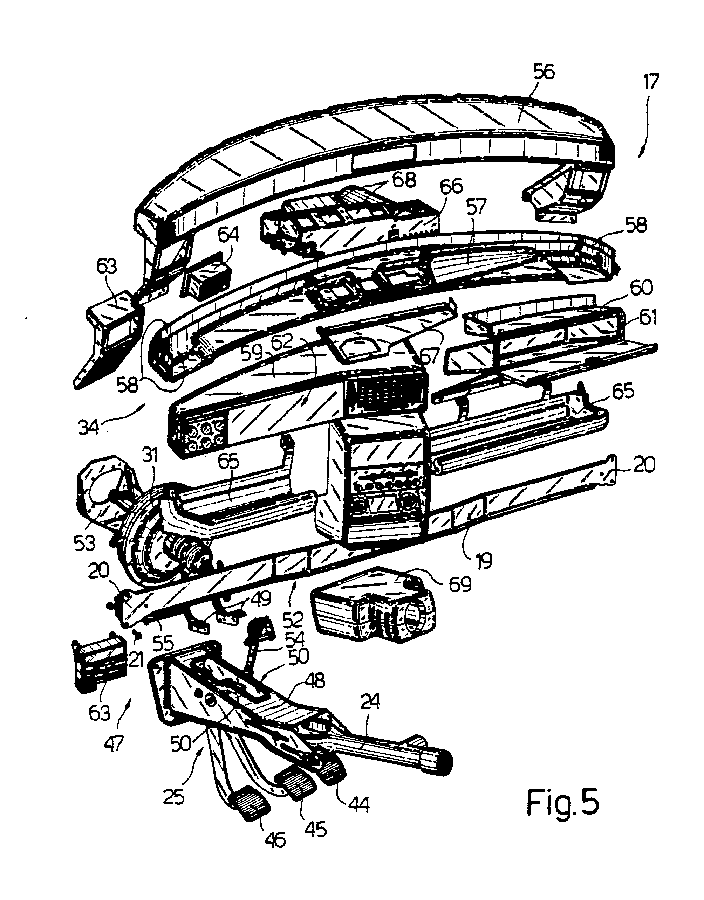

The vehicle 1 is provided inside the passemger compartment 3 with a dash panel 17 constituted by a support cross member 19 to be rigidly but removably fixed to the body 2 inside the passenger compartment 3 in a position facing the bulkhead 5. In particular, the cross member 19 is constituted by a rectilinear box beam of substantially rectangular cross-section provided with opposing ends 20 (Figure 2) arranged for fixing by screws 21 to respective brackets 22 formed in one piece with the body 2 and disposed at the level of the element 15. The cross member 19 is provided with cable passage holes and/or weight reducing holes 23 and is arranged to support a steering column 24 and a pedal board 25 (Figure 4), which are both mounted rigid with a support element 26 for the steering column 24, mounted rigid in its turn with the cross member 19 by bolts 27. The steering column 24 and pedal board 25 are thus rigid with the cross member 19 and are fixed to the body 2 by means of this latter. The element 26 is provided with a lower end 28 arranged for bolting to the element 14 and supporting a bracket 29 disposed in line with the bulkhead 5 on the same side as the passenger compartment 3, and extending above the element 26 in a position facing one of the portions 16 of the upper element 15.

The upper element 15 and the cross member 19 define inside the passenger compartment 3 a front housing compartment 30 for accessory devices of any type. In particular, in the illustrated example, the compartment 30 is arranged to contain a servo brake 31, particularly but not exclusively of the vacuum type, and an air conditioning and ventilation device 32 for the passenger compartment 3. The servo brake 31 is supported indirectly by the cross member 19 by being fixed to the bracket 29, whereas the air conditioner 32 is directly supported by the cross member 19 by means of one or more brackets 33 (Figure 1). In addition, the cross member 19 is arranged to support both any other device which can be housed in the compartment 30, and an instrument panel 34 (Figure 1) which closes the compartment 30 in the direction of the passenger compartment 3 above the cross member 19. In particular, the instrument panel 34 rests on the air conditioning device 32 and is therefore supported indirectly by the cross member 19.

With reference to Figure 4 the servo brake 31 comprises a master cylinder 35, a booster 36 and a control device 37, which are mounted rigid with each other. The control device 37 and the vessel 36 are housed inside the accessories compartment 30, whereas the master cylinder 35 is housed in the engine compartment 4 in a seat 38 provided on that surface 39 of the portion 16 associated with the bracket 29 which faces the engine compartment 4. In the illustrated example both the side portions 16 are provided with a seat 38 so that the vehicle 1 is suitable for mounting either a right hand drive of a left hand drive, according to whether the element 26 carrying the steering column 24, servo brake 31 and pedal board 25 is mounted on the cross member 19 at the one or the other of the side portions 16. The seat 38 carrying the master cylinder 35 is provided with a through hole 40 formed in the element 15 in a position corresponding with the servo brake 31 and able to allow the master cylinder 35 to pass through it from the compartment 30 to the engine compartment 4. The hole 40 is obviously provided with a seal gasket 41 mounted between the bracket 29 and the end 42 at which the master cylinder 35 is fixed to this latter.

The master cylinder is mechanically supported by the bracket 29, to which it is fixed on the side facing the engine compartment 4, whereas on the opposite side the bracket 29 carries the booster 36. In this manner, the mechanical stresses produced by the operation of the master cylinder 35 are totally absorbed by the bracket 29 without acting on the booster 36, which can be constructed of a material of low cost and low mechanical strength, for example a plastics material, as it does not have to be load-bearing. Because of its curved shape and its concavity, the central portion 18 is able to house part of the air conditioning device 32, and enables the compartment 30 to be enlarged by occupying part of the space normally reserved to the engine compartment 4.

With reference to Figure 5, there is shown in detail the dash panel 17, in which all the elements are supported by the cross member 19. More in detail, the cross member 19 is arranged for directly supporting the steering column 24 and the pedal board 25 (of which pedals 44, 45, 46 are shown for driving accelerator, brake and clutch respectively) so connecting them to each other in order to form a self-supporting unit (or sub-assembly) 47 which can be assembled separately from the vehicle 1 and then be mounted inside the passenger compartment 3, rigid with the body 2, by means of the ends 20 of the cross-member 19 (see also Figure 2).

The pedal board 25 and steering column 24 are both mounted rigid with a beam-type support element 48 positioned perpendicular to the cross-member 19 and provided with respective brackets 49 to be fixed rigid with the element 48, preferably by welding, at its upper edges 50. The brackets 49 are arranged for removable fixing, by means of screws, not shown, to the lower part 52 of the cross-member 19, in any position along the axis of this latter and preferably on a portion of the cross-member 19 close to one or other of the ends 20, at choice. Consequently the element 48 is fixed rigidly to the cross-member 19 in a position below this latter, and thus the pedal board 25 and steering column 24 become directly mounted on the cross-member 19, and fixed to the body 2 exclusively by means of this latter. In the particular example illustrated, the cross-member 19 also carries bracket 53 for supporting the servo brake 31, which is controlled by the pedal 45 by means of a lever system 54 supported by a pin 55 carried by the brackets 49.

The instrument panel 34 comprises an upper element 56 and a lower element 57 which face each other and are arranged to define ducts 58 for aerating the passenger compartment 3, and frontal elements 59 and 60 which engage with the elements 56 and 57 in order to close the ducts 58 towards the passenger compartment 3, and define, extending towards these latter, an object compartment 61 and an instrument compartment 62. The instrument panel 34 is completed by finishing elements 63 and aeration ports 64 and object trays 65 and is preferably mounted directly on the cross-member 19 so that it is supported by this latter instead of directly by the body 2. It can be fixed to the cross-member 19 by screws, not shown, or be supported by a ventilation device 66 (possibly also comprising air conditioning) of any known type, to which it is fixed by a conveying element 67 mounted on ports 68 of the device 66. This latter is itself fixed on the cross-member 19, which is therefore arranged to support both the device 66 and the instrument panel 34, these thus being fixed thereby to the body 2. Finally, the dash panel 17 is completed by a covering 69 for the steering column 24.

The dash panel 17 is constructed in the following manner. Firstly, the cross-member 19 is formed by bending and welding sheet metal and the instrument panel 34 is formed, on a different line, by moulding the elements 56, 57, 59, 60, 63, 65 and 67, and assembling them using adhesives and/or screws. The pedal board 25 and steering column 24 are then assembled on the element 48 and this latter is then fixed to the cross-member 19 by means of the brackets 49, to form a self-supporting unit 47. During this assembly operation, the dash panel 17 can be arranged either for right-hand drive of for left-hand drive without making any modification to the structure of the body 2, which is assembled separately on a different assembly line. In this respect, if the element 48 is mounted on that half of the cross-member 19 corresponding to the left end 20 (Figure 5), a dash panel with left-hand drive is obtained, whereas by simply mounting the element 48 in a position corresponding with the right end 20 a dash panel with right-hand drive is obtained without any structural modification. Any accessories are mounted on the cross-member 19 at this point, such as the servo brake 31, which can be thus immediately connected to the pedal 45 and tested, and the device 66, after which the instrument panel 34 is placed on the cross-member 19 and fixed to the device 66 and/or directly to the cross-member 19. The instrument panel 34 is the only component of the dash panel 17 which requires structural modification to pass from left-hand drive to right-hand drive, this modification being easily done by changing the form of the moulds, and without modifying any load-bearing parts of the dash panel 17 or body 2.

Finally, the self-supporting unit 47 obtained by assembling the various elements on the cross-member 9 is mounted on the vehicle 1 by a single operation consisting of inserting the unit 47 into the passenger compartment 3 and then fixing merely the cross-member 19 to the brackets 22 in a position facing the bulkhead 5, using the screws 21. This operation is rapid and simple, and can be carried out on the assembly line either manually or automatically, without the need for the assembly personnel to assume uncomfortable positions or enter the passenger compartment 3 in order to fix the ends 20, as this operation can be easily carried out from the outside through the door openings. Moreover, in order to make subsequent sylistic modifications to the instrument panel 34 it is not necessary to carry out any work on the body 2, as often happens in the case of current vehicles, it being merely necessary to replace the instrument panel 34 as a block. Finally, if repair work has to be carried out on the body (for example after an accident) it is a very simple and rapid operation to remove the dash panel 17 by extracting it completely from the vehicle and then to remount it when the repair has been made.

By examining the vehicle 1, it is possible to see that the combination of the cross-member 19 with the particular configuration of the fire protection bulkhead 5 enables a large compartment to be formed between this latter and the vehicle instrument panel for housing any vehicle auxiliary device, and capable even of containing air conditioning devices of high capacity and thus of large overall dimensions, which in known vehicles could not be installed other than by costly and complicated modifications to the load-bearing structures of the vehicle body. The housing compartment obtained in this manner is also suitable for housing the vehicle servo brake, either to the right or to the left of the air conditioner, and in particular those servo brake elements which are not substantially subject to faults, whereas the servo brake pump, on which frequent maintenance work is necessary, is disposed on the engine compartment side in an easily accessible position, in that it is shielded by the convexity of the portion 18. Finally, the present invention enables a vehicle to be provided which is already suitable for equipping for either right hand or left hand drive without appreciable modification. In this respect, in order to arrange the vehicle for normal left hand drive it is necessary only to mount the element 26 on the cross member 19 towards that end 20 which faces the left hand lateral portion 16 of the element 15, and form the hole 40 in the seat 38 of this latter element. In contrast, to obtain a vehicle with a right hand drive it is necessary only to mount the element 26 towards the end associated with the right hand lateral portion 16 of the element 15, and to form the hole 40 in this latter. If the hole 40 is provided in the left-hand lateral portion 16 by virtue of the mass production process, it is necessary only to close this hole with a suitable cover.

**Claims**

1. A vehicle (1) comprising a body (2), which is internally subdivided by a transverse fire protection bulkhead (5) into a passenger compartment (3) and an engine compartment, and a dashboard assembly (17) for said passenger compartment (3), comprising a support cross-member (19) arranged to be fixed rigidly, but removably, to said body (2) inside the passenger compartment in a position facing said bulkhead (5), a steering column (24) and a pedal board (25), both fixed rigidly to said support cross-member (19), and an instrument panel (34) supported by said cross-member (19) in a position above the same, characterized in that said fire protection bulkhead (5) comprises, in combination with said dashboard assembly (17), a substantially flat lower element (14) arranged to frontwardly bound the floor of said passenger compartment (3), and a cup-shaped upper element (15) having its concavity facing said support cross-member (19) and its convexity projecting into the interior of said engine compartment (4), in such a manner that at least part of said upper element (15) extends towards the engine compartment beyond said lower element (14); said support cross-member (19) and said upper element (15) of the bulkhead (5) defining therebetween, inside said passenger compartment, a housing compartment (30) for a vacuum servo-brake (31) and for further accessory devices for said vehicle, such as air conditioning and ventilation device (32) for the passenger compartment; and said instrument panel (34) being shaped in such a manner that it closes said housing compartment towards the passenger compartment.

2. A vehicle (1) as claimed in claim 1, characterized in that said air conditioning and ventilation device (32) is fixed directly onto said cross-member (19) by at least a first bracket (33), said instrument panel (34) resting on said air conditioning and ventilation device (32).

3. A vehicle (1) as claimed in claim (1), characterized in that said vacuum servo brake (31) comprises a master cylinder (35), a booster (36) and a control device (37), which are mounted rigid with each other, said booster (36) and said control device (37) being housed inside said accessories compartment (30), and said master cylinder (35) being housed in said engine compartment (4) by emerging from said accessories compartment (30) by way of a through hole (40) provided in said upper element (15) of said bulkhead (5).

4. A vehicle (1) as claimed in claim 3, characterized in that said pedal board (25) is mounted on a support element (26) for said steering column (24), said element (26) being fixed to said cross member (19) and provided with a lower end (28) arranged to be bolted to said lower element (14) of said bulkhead (5), said lower end (28) supporting a second bracket (29) disposed in line with said bulkhead (5) on the same side as said passenger compartment (3); said second bracket (29) carrying said master cylinder (35) on that side facing said engine compartment (4), and carrying on the opposite side said booster (36) so that mechanical stresses produced by the operation of said master cylinder (35) are absorbed by said second bracket (29) without acting on said booster (36).

5. A vehicle as claimed in claim 3 or 4, characterized in that said upper element (15) of said bulkhead (5) comprises two opposing substantially flat lateral positions (16), each of said lateral portions (16) being provided with a seat (38) for said master cylinder (35) on that surface (39) facing said engine compartment (4), and a central curved portion (18) embracing said concavity and extending towards said engine compartment (4), said central portion (18) being arranged to house at least part of said air conditioning and ventilation device (32).

6. A vehicle (1) as claimed in claim 5, characterized in that one of said seats (38) of said lateral portions (16) is provided with said through hole (49), said servo brake (31) being mounted in a position corresponding with said hole (40), which is provided with a seal gasket (41).

7. A vehicle (1) as claimed in one of the preceding claims, characterized in that said upper element (15) of said bulkhead (5) is welded lowerly to said lower element (14) and upperly to a load-bearing cross member (7) of said body (2) which defines a duct (8) for conveying air to said accessories compartment (30).

**Patentansprüche**

1. Fahrzeug (1), bestehend aus einer Karosse (2), welche innen durch ein Querbrandschott (5) in einen Innenraum (3) und einen Motorraum unterteilt ist, sowie einem Stirnwandaggregat (17) für den Innenraum (13) mit einem Querträger (19), der fest jedoch abnehmbar an der Karosse (2) innerhalb des Innenraumes (53) in einer zum Schott (5) hinweisenden Lage befestigt ist, einer Lenksäule (24) und einer Pedalsteuerung (25), beide fest am Querträger (19) angebracht und einem vom Querträger abgestützen Armaturenbrett (34) über diesem, dadurch gekennzeichnet dass das Schott (5) zusammen mit dem Stirnwandaggregat (17) ein flaches Unterteil (14) aufweist, welches vorne den Boden des Innenraumes (3) begrenzt, sowie ein schalenförmiges Oberteil (15), dessen Konkavität zum Träger (19) gerichtet ist und dessen Konvexität so in den Motorraum (4) hineinragt, dass mindestes eine Partie des Oberteiles (15) zum Motorraum über das Unterteil (14) sich erstreckt, während der Querträger (19) und das Oberteil (15) des Schottes (5) innerhalb des Innenraumes eine Öffnung (30) für eine Unterdruck-Servobremse (31) und sonstige Nebenaggregate des Fahrzeuges, wie Lüftungs- und Klimageräte (32) für den Innenraum aufweist und das Armaturenbrett (34) so profiliert ist, dass es die Öffnung (30) zum Innenraum hin verschliesst.

2. Fahrzeug (1) nach Anspruch 1, dadurch gekennzeichnet, dass das Lüftungs- und Klimagerät (32) direkt am Querträger (19) mittels mindestens einem ersten Bügel (33) befestigt ist und das Armaturenbrett (34) auf dem Lüftungs- und Klimagerät (32) sitzt.

3. Fahrzeug nach Anspruch 1, dadurch gekennzeichnet dass die Unterdruck-Servobremse (31) einen Hauptzylinder (35), eine Servosteuerung (36) sowie eine Schaltvorrichtung (37) fest untereinander verbunden enthält, wo die Servosteuerung (36) und die Schaltvorrichtung (37) in einer Nebenaggregatöffnung (30) und der Hauptzylinder (35) im Motorraum (4) untergebracht ist und aus der öffnung (30) durch eine Bohrung (40) im Oberteil (15) des Schottes (5) hervorragt.

4. Fahrzeug nach Anspruch 3, dadurch gekennzeichnet dass Die Pedalsteuerung (25) an einem Tragelement (26) der Lenksäule (24) montiert ist, während das Element (26) am Querträger (19) befestigt ist und ein unteres Ende (28) aufweist, welches an das Unterteil (14) des Schottes (5) angeschraubt ist und das untere Ende (28) einen zweiten Bügel (29) besitzt, der sich linear zum Schott (5) auf derselben Seite des Innenraums (3) erstreckt und wo der zweite Bügel (29) den Hauptzylinder (35) an der zum Motor (4) gerichteten Seite, sowie auf der gegenüberliegenden Seite die Servosteuerung (36) so abstützt, dass durch den Betrieb des Hauptzylinders (35) auftretend mechanische Belastungen vom zweiten Bügel (29) aufgenommen werden ohne auf die Servosteuerung (36) einzuwirken .

5. Fahrzeug (1) nach Anspruch 4 bzw. 5, dadurch gekennzeichnet dass das Oberteil (15) des Schottes (5) zwei seitlich gegenüberliegende flache Teile (16) aufweist, wovon jede der Seitenteile (16) einen Sitz (38) für den Hauptzylinder (35) auf der zum Motorraum (4) hinweisenden Fläche (39), sowie ein gebogenes Mittelteil (18) besitzt, welches die Konkavität umgibt und zum Motorraum (4) hin verläuft, während das Mittelteil (18) so vorgesehen ist, dass es mindestens eine Partie des Klima- und Lüftungsgerätes (32) aufnimmt.

6. Fahrzeug nach Anspruch (5), dadurch gekennzeichnet dass einer der Sitze (38) der Seitenteile (16) eine durchgehende Bohrung (49) aufweist und die Servosteuerung (31) sich in einer Lage entsprechend dieser Bohrung (40) befindet, die eine Dichtung (41) besitzt.

7. Fahrzeug (1) nach irgendeinem der vorhergehenden Ansprüche, dadurch gekennzeichnet dass das Oberteil des Schottes (5) untem am Unterteil (14) und oben am Lastenquerträger (7) der Karosse (2), der einen Leitungskanal (8) begrenzt um die Aussenluft zur Öffnung (30) zu führen, angeschweisst ist.

**Revendications**

1. Véhicule (1) comprenant une carrosserie (2), intérieurement subdivisée par une cloison pare-feu transversale (5) en un compartiment passagers (3) et un compartiment moteur (4), et un ensemble de bord (17) pour le compartiment passagers (3), comprenant une travers support (19) agencée pour être solidarisée, mais de façon amovible, de la carrosserie (2) à l'intérieur du compartiment passagers dans une position faisant face à cette cloison (5), une colonne de direction (24) et un bloc pédales (25), tous deux solidarisés de cette traverse support (19) et un tableau d'instruments (34) supporté par la traverse (19) dans un emplacement situé au-dessus de celle-ci, caractérisé en ce que cette cloison pare-feu (5) comporte, en combinaison avec l'ensemble de bord (17), un élément inférieur sensiblement plan (14). disposé pour limiter vers l'avant le plancher du compartiment passagers (3), et un élément supérieur en forme de cuvette (15) dont la concavité fait face à la traverse support (19) et la convexité se projette dans l'intérieur du compartiment moteur (4) de telle manière qu'au moins une partie de l'élément supérieur (15) s'étende en direction du compartiment moteur au-delà de cet élément inférieur (14), la traverse support (19) et l'élément supérieur (15) de la cloison (5) définissant entre elles, à l'intérieur du compartiment passagers, un logement (30) pour un servo frein à dépression (31) et pour d'autres dispositifs accessoires du véhicule, tels qu'un dispositifs de conditionnement d'air et de ventilation (32) du compartiment pasagers, ce tableau d'instruments (34) étant formé de manière à fermer ce logement en direction du compartiment passagers.

2. Véhicule (1) selon la revendication 1, caractérisé en ce que le dispositif de conditionnement d'air et de ventilation (32) est fixé directement sur la traverse (19) par au moins une première ferrure (33), le tableau d'instruments (34) reposant sur ce dispositif de conditionnement d'air et de ventilation (32).

3. Véhicule (1) selon la revendication 1, caractérisé en ce que le servofrein à dépression (31) comporte un maître-cylindre (35), un booster (36) et un dispositif de commande (37), solidarisés l'un de l'autre, le booster (36) et le dispositif de commande (37) étant logés à l'intérieur du compartiment d'accessoires (30) et le maître-cylindre (35) étant logé dans le compartiment moteur (4) en sortant du logement d'accessoires (30) par un trou traversant (40) ménagé dans l'élément supérieur (15) de la cloison parefeu (5).

4. Véhicule (1) selon la revendication 3, caractérisé en ce que le bloc pédales (25) est monté sur un élément support (26) pour la colonne de direction (24), cet élément (26) étant fixé sur la traverse (19) et comportant une extrémité inférieure (28) agencée pour être boulonnée sur l'élément inférieur (14) de la cloison (5), cette extrémité inférieure (28) supportant une deuxième ferrure (29) alignée avec la cloison (5) sur le même côté que le compartiment passagers (3), cette deuxième ferrure (29) portant le maître-cylindre (35) sur le côté faisant face au compartiment moteur (4) et portant sur le côté opposé, le booster (36) de telle sorte que les contraintes mécaniques produites par le fonctionnement du maître-cylindre (35) sont absorbées par la deuxième ferrure (29) sans agir sur le booster (36).

5. Véhicule (1) selon la revendication 3 ou 4, caractérisé en ce que l'élément supérieur (15) de la cloison (5) comporte deux portions latérales opposées pratiquement planes (16), chacune de ces portions latérales (16) comportant un siège (38) pour le maître-cylindre (35) sur cette surface (39) faisant face au compartiment moteur (4) et une portion centrale incurvée (18) entourant cette concavité et s'étendant en direction du compartiment moteur (4), cette portion centrale (18) étant agencée pour loger au moins une partie du dispositifs de conditionnement d'air et de ventilation (32).

6. Véhicule (1) selon la revendication 5, caractérisé en ce que l'un de ces sièges (38) des portions latérales (16) comporte un trou traversant (40), le servofrein (31) étant monté dans une position en correspondance avec ce trou (40), lequel est équipé d'une garniture d'étanchéité (41).

7. Véhicule (1) selon l'une des revendications précédentes, caractérisé en ce que l'élément supérieur (15) de cette cloison pare-feu (5) est soudé, en bas sur l'élément inférieur (14) et en haut sur une traverse portante (7) de la carrosserie (2) qui définit un conduit (8) pour transporter l'air extérieur au logement d'accessoires (30).

Fig.1

Fig. 2

Fig. 4

2

Fig.3

0 141 959

Fig.5